Europäisches Patentamt

European Patent Office

Office européen des brevets

(19)

(11) Veröffentlichungsnummer: **0 060 997**

**A1**

(12) # EUROPÄISCHE PATENTANMELDUNG

(21) Anmeldenummer: **82101221.8**

(22) Anmeldetag: **18.02.82**

(51) Int. Cl.³: **C 05 F 9/04**
**C 05 F 3/06**

(30) Priorität: **27.02.81 DE 3107616**

(43) Veröffentlichungstag der Anmeldung:
**29.09.82 Patentblatt 82/39**

(84) Benannte Vertragsstaaten:
**AT CH FR GB LI NL**

(71) Anmelder: **Weichel, Ernst**
**Bahnhofstrasse 1**
**D-7326 Heiningen(DE)**

(72) Erfinder: **Weichel, Ernst**
**Bahnhofstrasse 1**
**D-7326 Heiningen(DE)**

(54) **Verfahren und Vorrichtung für die aerobe Verrottung und Kompostierung organischer Massen unter gleichzeitiger Gewinnung nutzbarer Wärme.**

(57) Für ein Verfahren zur aeroben Verrottung und Kompostierung organischer Massen ist vorgesehen, das Rottematerial (1) durch ausschließlich von oberhalb der Lagerfläche (2) her wirksame mechanische Einrichtungen die Aufschichtung sowie das Umsetzen vorzunehmen. Der Umsetzvorgang wird ein oder mehrmals unter schrittweiser, seitlicher Verlagerung des Rotteguthaufens vorgenommen, wobei gleichzeitig eine Auflockerung und Zerkleinerung der angerotteten Masse stattfindet.

EP 0 060 997 A1

ERNST    W E I C H E L          7326 HEININGEN,  12.02.1982
                                 Bahnhofstr. 1

Verfahren und Vorrichtung für die aerobe Verrottung
und Kompostierung organischer Massen unter gleichzeitiger Gewinnung nutzbarer Wärme

Die Erfindung bezieht sich auf ein Verfahren nach dem
Oberbegriff des Hauptanspruches sowie auf eine Vorrichtung bzw. die Variation verschiedener Anlagen zur
Verfahrensdurchführung.

Angesichts der zunehmenden Abfall- und Umweltprobleme
und der riesigen Mengen organischer Masse, die weltweit ohne sinnvolle Verwertung verkommen, kann dies
nur dadurch erklärt werden, daß die bisher gebräuchlichen Verfahren zur Kom-postierung schwerwiegende
Nachteile aufweisen:

Die übliche Haufenkompostierung macht nicht nur viel
zu viel Arbeit und führt in den meisten Fällen zu Mißerfolgen, Verlusten, Fäulnis usw., weil es schwierig
ist, optimale Rottebedingungen in der Praxis ständig
aufrechtzuerhalten, sondern läßt auch die entstehende
Prozeßwärme ungenutzt entweichen.

- 2 -

Moderne Kompostwerke wiederum erfordern einen viel zu hohen Investitionsaufwand und benötigen daher ein relativ großes Einzugsgebiet, was unrationelle Transporte des zur Kompostierung geeigneten Materials und des fertigen Kompostes verursacht. Außerdem wird bei der Verarbeitung organischer Abfälle in zentralen Kompostwerken organisches Material guter Qualität, z.B. aus ländlichen Räumen, mit Industrieabfällen, die auch Gifte, z.B. Schwermetalle, enthalten, gemischt und dadurch der entstehende Kompost für landwirtschaftliche Zwecke, insbesondere für die Nahrungsmittelerzeugung, weitgehend unbrauchbar gemacht.

Die bereits erwähnten Umweltprobleme, der vorhersehbare Mangel an Nahrungsmitteln, Rohstoffen und Energie und die Verarmung vieler Kulturböden erfordern daher die Beseitigung dieser Nachteile.

Die Kompostierung organischer Abfälle, Müll usw. in großen Mischtrommeln oder in als große Silos ausgebildeten Reaktoren, denen das Material von oben zugeführt, im Reaktor belüftet und an der Unterseite entnommen wird, erfordert viel zu hohe Investitionskosten und verursacht Schwierigkeiten im Betrieb, da sehr große

- 3 -

Materialmengen, die oft zur Verfilzung neigen oder eine ganz unterschiedliche Dichte und Zusammensetzung aufweisen, verarbeitet werden müssen. Deshalb läßt es sich auch in den modernsten Kompostreaktoren trotz Belüftung des Materials nicht vermeiden, daß immer wieder Fäulnisnester entstehen, denen die zugeführte Luft ausweicht, so daß minderwertige Kompostqualitäten und Emissionen entstehen. Die meisten Materialien, die beim Bau der Rottebehälter verwendet werden, z.B. Stahl, Aluminium, Kupfer, verzinktes Blech, haben eine geringe Lebensdauer, weil sie durch die aggressiven Bestandteile des Rottematerials und die Sauerstoffzufuhr zu schnell korrodieren.

Der vorliegenden Erfindung liegt deshalb die Aufgabe zugrunde, den Kompostierungsprozeß in auf dem Erdboden oder einem Betonboden o.ä. gelagerten Haufen derart durchzuführen, daß das Material mechanisch, aber in kurzen Zeitabständen maschinell umgesetzt und dabei stets oder gelegentlich auch zusätzlich zerkleinert wird. Damit ist sichergestellt, daß alle etwaigen Fäulnisnester immer wieder aufgelockert, belüftet und mit anderem Material gemischt werden.

- 4 -

Außerdem beseitigt die Erfindung den Nachteil, daß die z.B. in strohreichem Mist entstehende Prozeßwärme nur sehr unvollkommen mittels Wärmetauscher abgeführt werden kann, weil es ebenso wie Grünfutter, Papier usw. ein sehr schlechter Wärmeleiter ist.

Die ungenügende Abfuhr der Wärme führt aber zu überhöhten Temperaturen und damit zu einer Hemmung der Vermehrung der aeroben Bakterien und zu einer Verzögerung des Abbauprozesses.

Das Entstehen hoher Temperaturen während eines gewissen Zeitraumes ist zwar durchaus erwünscht, um die Verwertung der Rottewärme zu erleichtern und eine Hygienisierung des Materials, d.h. die Abtötung von Krankheitskeimen, Unkrautsamen usw. zu erreichen.

Eine anschließende Abkühlung des Materials ist aber erforderlich, um die Verrottung zu beschleunigen.

Sie kann durch Entnahme von (feuchtigkeitsgesättigter) Luft und Wiedereinleitung derselben nach Abkühlung in einem Wärmetauscher erfolgen.

Erfindungsgemäß wird das Material außerdem beim Umsetzen zusätzlich zerkleinert und durch Rühren, Mischen, Schieben zusätzlich stärker abgekühlt, als es bisher

- 5 -

durch das Abziehen von Warmluft, Wasserdampf über bekannte Wärmetauscher, die entweder in den Wänden oder im Innern der Behälter angeordnet sein können, möglich war.

Das abgekühlte Material wird anschließend wieder in den noch warmen Rottebehälter eingefüllt und daher sofort wieder auf diejenige Temperatur gebracht, die die Vermehrungstätigkeit der Bakterien begünstigt.

Die in Intervallen stoßweise abgeführte Wärme kann dabei entweder verbraucht oder einem Pufferspeicher bzw. einer Trocknungsanlage zugeführt werden. Die mit $CO_2$ angereicherte Warmluft kann aber auch direkt zur Erwärmung der Luft in Gewächshäusern und zur Düngung der darin wachsenden Pflanzen verwendet werden.

In den Zeichnungen sind schematisch Anlagenelemente und Anlagen zur Durchführung des erfindungsgemäßen Verfahrens dargestellt; diese Elemente sowie die Verfahrensabläufe selbst sind zudem anhand dieser Skizzen in der Zeichnungsbeschreibung näher erläutert.

- 6 -

Es zeigen:

Fig. 1     das Grundprinzip einer Anlage zur Durchführung des erfindungsgemäßen Verfahrens in Ansicht,

Fig. 2     eine Draufsicht zu Fig. 1,

Fig. 3     eine Alternativausführung zu Fig. 1,

Fig. 4     eine Draufsicht zu Fig. 3,

Fig. 5     eine weitere Alternativausführung zu Fig. 1,

Fig. 6     eine Draufsicht zu Fig. 5,

Fig. 7     nochmals eine Alternativausführung zu Fig. 1, und

Fig. 8     eine Draufsicht zu Fig. 7.

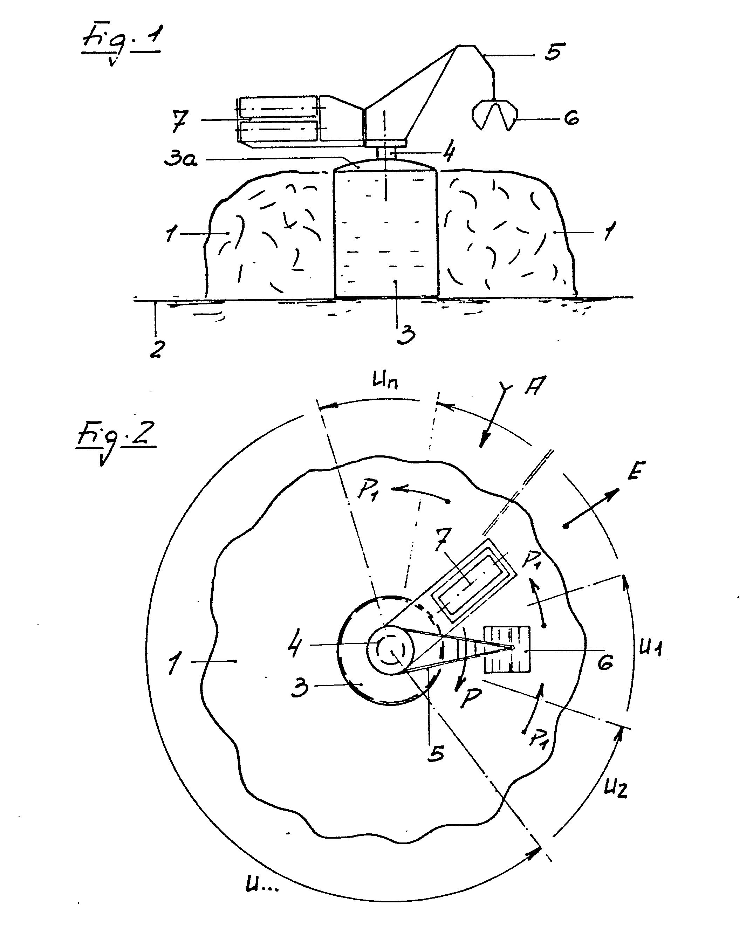

Bei der in Fig. 1 dargestellten Anlage ist das Rottegut 1 auf einer Lagerfläche 2 lose aufgeschichtet und umgibt etwa kreisförmig einen zentrisch angeordneten Wärmetauscher bzw. Warmwasserspeicher 3 stehender Bauart.

- 7 -

Um einen zentrisch zu letzterem auf der Speicheroberseite 3a liegenden Zapfen 4 drehbar ist nun einerseits ein Hebezeug 5 mit Greifer 6 angeordnet und ebenfalls auf dem gleichen Kreisbogen verschwenkbar.eine zusätz-liche Zerkleinerungseinrichtung 7; diese Zerkleinerungs-einrichtung kann dabei beispielsweise eine Art Mühle sein, oder aber eine Fräse, ein Reißwerk o. dgl.

In der Draufsicht nach Fig. 2 ist nun der schrittweise Verfahrensablauf der Umsetzung des Rottematerials 1 angedeutet. Erfindungsgemäß wird dabei davon ausgegangen, daß der kreisringförmige Rotteguthaufen 1 in verschiedene Sektoren unterteilt ist, wobei ein Aufgabesektor "A" für das unverrottete Gut und ein Entnahmesektor "E" für das fertig kompostierte Material unmittelbar nebeneinander liegen. Stellt man sich nun vor, daß der Entnahmesektor "E" geleert wurde, so kann durch Verfahren des Hebezeuges 5 gemäß Pfeilrichtung P nach $U_1$ das dort liegende Gut in den Sektor E befördert werden, danach das Gut aus dem Sektor $U_2$ in den zuvor leergewordenen Sektor $U_1$ und so weiter ($U$ ....) bis zum Sektor $U_n$; ist dieser dann frei geworden, kann letztlich neu in den Aufnahmesektor A eingebrachtes frisches Gut nach $U_n$ umgesetzt werden.

- 8 -

Falls bei diesen Umsetzvorgängen noch eine zusätzliche Zerkleinerung des Rotteguts erforderlich sein sollte, kann von Fall zu Fall dies dadurch erreicht werden, daß das Rottematerial nicht direkt von einem Sektor in den anderen umgeladen, sondern durch den in den jeweiligen Sektor eingeschwenkten Zerkleinerer geschickt wird. Bei diesen wiederholten Umsetzvorgängen, bei denen auch in jeder Rottestufe neben einer Nachzerkleinerung frisches Gut zur Prozeßsteuerung zugegeben werden kann, bewegen sich also Hebezeug 5 mit Greifer 6 und Zerkleinerer 7 im allgemeinen im Uhrzeigersinn auf dem Wärmetauscher 3, während das Rottegut 1 entgegen dem Uhrzeigersinn - Pfeile $P_1$ - vom Aufgabe- bzw. Beschickungssektor A aus um den Wärmetauscher 3 schrittweise herumwandert bis zum Entnahmesektor E.

Eine gute Durchmischung des Rottematerials in jedem Sektor kann zudem noch dadurch erzielt werden, daß beim Umsetzen das zuvor an der Außenseite eines Sektors gelagerte Gut an die Innenseite des nächsten Sektors verlegt wird und das an der Oberfläche anliegende nach unten zur Lagerfläche gelangt, während das zuvor unterste nach oben kommt.

- 9 -

Durch zeitweise Entnahme des erwärmten Wassers aus dem Speicher 3 kann zudem die Rottetemperatur im Rotteguthaufen 1 gezielt beeinflußt werden; entsprechende Wasserführungsleitungen hierzu sind zeichnerisch nicht dargestellt.

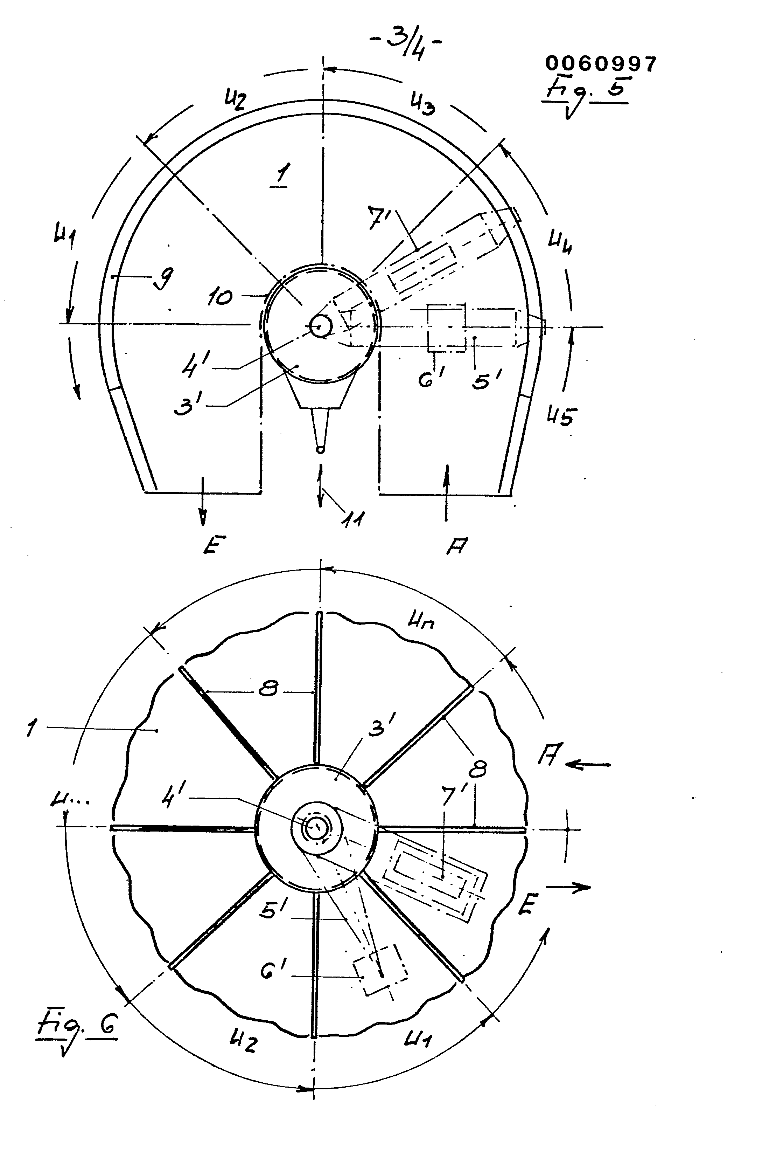

Als Alternativen zu Fig. 1 bzw. 2 sind die Draufsichten auf eine Rottegutlagerstätte gemäß Fig. 5 und 6 anzusehen. Der zuvor beschriebene Verfahrensablauf ist hier der gleiche und vorrichtungsmäßig ist lediglich ein Unterschied darin zu sehen, daß bei Fig. 6 die einzelnen Sektoren A, U... und E durch Zwischenwände 8 gegeneinander abgegrenzt sind, wobei letztere ebenfalls als Wärmeaustauschelemente ausgebildet sein können.

Die Darstellung gemäß Fig. 5 ist insofern eine weitere Variante zu Fig. 1 bzw. 2, als hier der zuvor frei aufgeschichtete Rotteguthaufen 1 hufeisenförmig angelegt und durch eine ringförmige Außenwand 9, die ebenfalls Wärmeaustauschelemente enthalten kann, begrenzt ist. Hebezeug 5' und Zerkleinerer 7' können zudem als Kranbrücke ausgebildet und zentrisch auf einem Gestell 10 abgestützt sein, so daß es möglich wird, den zentralen Wärmetauscher mit Rädern zu versehen und bei Bedarf

- 10 -

durch den freien Raum 11 herauszuziehen. Bei mehreren nebeneinander angeordneten Rotteguthaufen kann so beispielsweise ein einziger Wärmetauscher 3' jeweils dorthin verfahren werden, wo gerade die höchsten Temperaturen vorliegen.

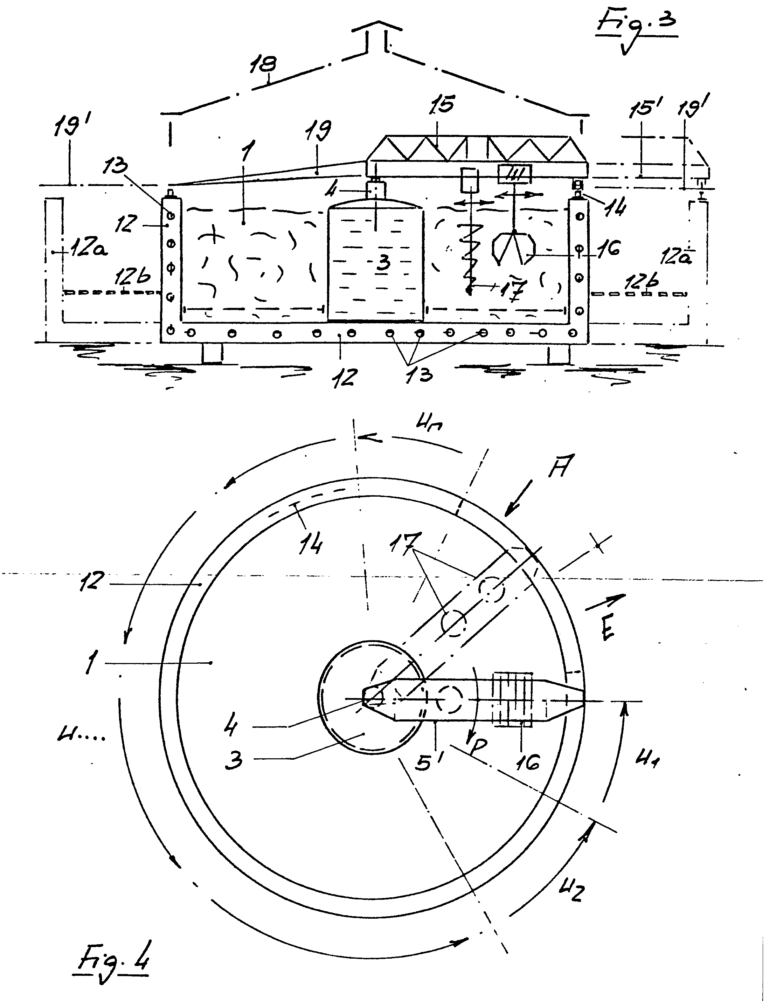

Bei den Darstellungen nach Fig. 3 und 4 ist der Verfahrensablauf genauso, wie er zu Fig. 1 und 2 beschrieben wurde. Vorrichtungsmäßig sind jedoch Unterschiede gemäß den Patentansprüchen dadurch gegeben, daß als Lagerfläche für das Rottegut 1 eine Art Silo 12 dient mit eingebauten Wärmetauschelementen 13, Kranlaufbahn 14 und Kranbrücke 15, an der das Greif- bzw. Hebewerkzeug 16 sowie Rühr- bzw. Mischelemente 17 horizontal verfahrbar angeordnet sind. Eine gebäudeartige Überdachung 18 oder eine mit der Kranbrücke 15 umlaufende Abdeckung 19 können ebenso vorgesehen sein, wie ein das Silo außen kreisringförmig umgebender zweiter Raum 12a mit Lagerrost 12b zur Aufnahme von Grüngut o.ä. Massen zwecks Trocknung. In nicht dargestellter Weise wird zur Trocknung die beim Rotteprozeß anfallende warme Luft abgesaugt und von unterhalb des Rostes 12b durch die zu trocknenden Massen gedrückt.

- 11 -

Wie mit Pos. 15' und 19' angedeutet ist, können
Kranbrücke 15 und die Abdeckung 19 bzw. zur Außenwand des zweiten Silos 12a hinaus verlängert sein.
Zudem haben die zeichnerischen Darstellungen nur
qualitativen Charakter und die in der einen Figur
angedeuteten Elemente oder baulichen Maßnahmen
können untereinander beliebig austauschbar sein.
Selbstverständliche Mittel, wie z.B. Silotüren,
Rohrleitungen, Luftführungen, Gebläse u.dgl. sind
zudem in den Zeichnungen nicht angedeutet.

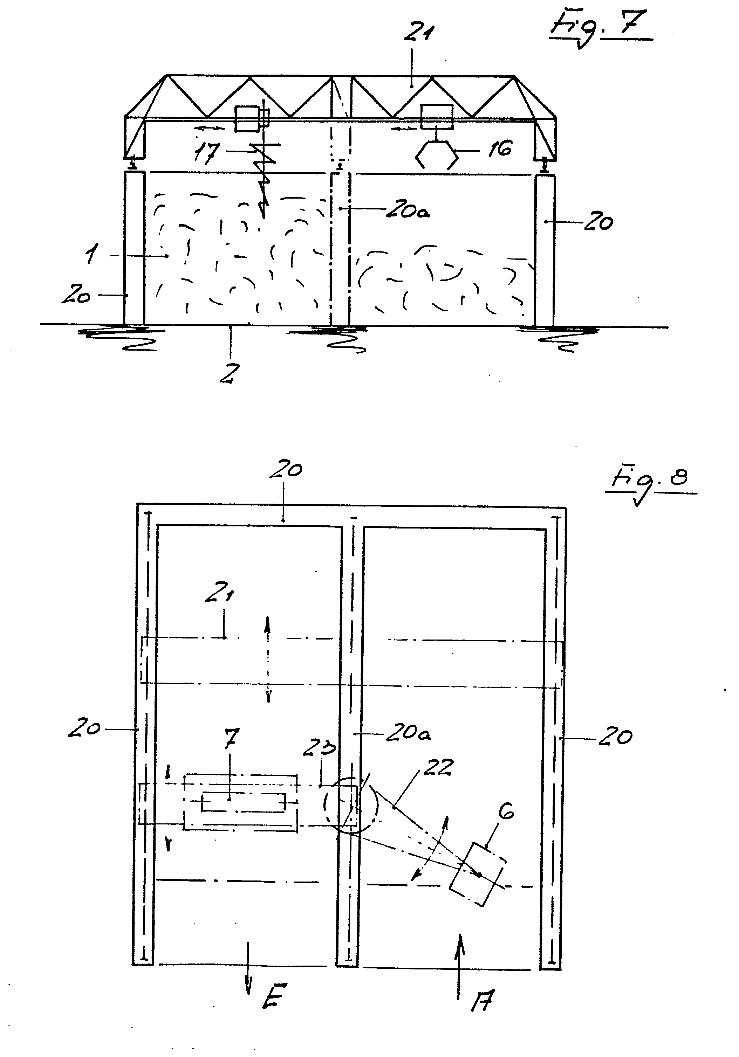

Eine weitere mögliche Variante ist letztlich
noch in Fig. 7 und 8 dargestellt.
Als Lagerstätte für das Rottegut 1 dient hier eine
Art Fahrsilo 20 mit oder ohne als Wärmetauscher ausgebildeter mittiger Zwischenwand 20a, Kranbrücke 21
oder Brücken-Schwenkkrankombination 22,23, sowie den
zur erfindungsgemäßen Verfahrensdurchführung notwendigen Umsetz-, Misch- und Zerkleinerungswerkzeugen
6, 7, 17. Der Verfahrensablauf beim Umsetzen des
Rottegutes 1 entspricht bei dieser Variante in etwa
demjenigen der hufeisenförmigen Lagerfläche gemäß
Fig. 6.

- 12 -

Wesentlich als Verfahrensmerkmal und für die bauliche
Gestaltung ist es aber bei allen der zuvor beschriebenen Skizzen, daß sämtliche Bearbeitungsvorgänge von
oberhalb des Rotteguthaufens aus erfolgen, und das
Rottegut selbst sektorartig oder abschnittsweise derart
umgesetzt wird, daß es im Laufe der Prozeßdauer bis zur
völligen Verrottung von einer Aufgabestelle A aus
schrittweise stetig zu einer Entnahmestelle E hinwandert.

– 1 –

Patentansprüche

1. Verfahren zur aeroben Verrottung und Kompostierung organischer Massen, beispielsweise der Abfälle von Halm- und Blattfrüchten, sowie insbesondere Stallmist und zur Gewinnung nutzbarer Wärme aus dem Rotteprozeß, wobei diese Abfallprodukte in Form von Haufen oder Mieten auf einer Lagerfläche aufgesetzt sind, deren räumliche Begrenzungen oder aber das Zentrum jedes Haufens durch einen Wärmetauscher gebildet werden, dessen Wandungen an dem Rottegut anliegen bzw. in letzteres eingebettet sind, dadurch gekennzeichnet, daß das Rottematerial (1) durch ausschließlich oberhalb der Lagerfläche (2) angeordnete, mechanische Geräte aufgeschichtet, sowie daran anschließend ein- oder mehrmals unter seitlicher Verlagerung schrittweise umgesetzt wird, bei gleichzeitiger Auflockerung bzw. Zerkleinerung der angerotteten Masse.

- 2 -

2. Verfahren nach Anspruch 1,

dadurch gekennzeichnet,

daß zur Ableitung der entstehenden Prozeßwärme neben dem im Zentrum des Rottegutshaufens (1) angeordneten Wärmespeicher (3) eine oder mehrere, den Rottegutshaufen begrenzende bzw. unterteilende, ebenfalls als Wärmetauscher ausgebildete, Wandungen (8) dienen.

3. Verfahren nach den Ansprüchen 1 und 2,

dadurch gekennzeichnet,

daß der Rotteprozeß in einem ringförmigen (Fig. 1 bis 4 und 6) oder hufeisenförmigen Haufen (Fig. 5) stattfindet

4. Verfahren nach einem der vorhergehenden Ansprüche,

dadurch gekennzeichnet,

daß die Verrottung gleichzeitig in mehreren, ring-, sektor- oder hufeisenförmigen Lagerstätten stattfindet, deren Zuführungs- und Entleerungsstellen (A bzw. E) sich jeweils an der Außenseite der Gesamtanordnung befinden.

- 3 -

5. Verfahren nach einem oder mehreren der vorhergehenden Ansprüche,

   dadurch gekennzeichnet,

   daß das Rottegut (1) von zur Trocknung aufgeschichteten, organischen o.ä. Masse umgeben ist und letztere von ihrer Lagerfläche (12b) und/oder den Seitenwänden (12a) her durch die bei der Verrottung anfallende Warmluft durchströmt sind.

6. Verfahren nach Anspruch 5,

   dadurch gekennzeichnet,

   daß die Warmluft von einem Gebläse angesaugt und durch die auf einem Rost (12b) gelagerten Massen (24) gedrückt wird.

7. Verfahren nach den Ansprüchen 5 und 6,

   dadurch gekennzeichnet,

   daß die zu trocknenden Massen (24) wechsel- bzw. wahlweise von Kalt- oder Warmluft durchströmt werden.

8. Verfahren nach den Ansprüchen 5 bis 7,

   dadurch gekennzeichnet,

   daß die zum Trocknen eingelagerten Massen (24) in gewissen Zeitabständen gelockert bzw. umgesetzt werden.

- 4 -

9. Vorrichtung zur Durchführung des Verfahrens nach einem oder mehreren der vorhergehenden Ansprüche, dadurch gekennzeichnet, daß die Lagerfläche (2) für das Rottegut kreisring- bzw. hufeisenförmig um einen zentralen Wärmetauscher (3) herum verläuft.

10. Vorrichtung nach Anspruch 9, dadurch gekennzeichnet, daß die ringförmige Lagerfläche (2) einen Aufgabe- (A) und einen Entnahmesektor (E) aufweist und die schrittweisen Umsetzvorgänge ebenfalls in Sektorabschnitten (4) vorgenommen werden.

11. Vorrichtung nach den Ansprüchen 9 und 10, dadurch gekennzeichnet, daß die ringförmige Lagerfläche breiter ist als die Breite des auf ihr gelagerten ringförmigen Materialhaufens, und daß dieser bei einem Vorgang des Umsetzens an seiner Außenseite abgetragen und gegen die Außenwand der ringförmigen Lagerfläche verlagert wird, und beim nächsten Umsetzvorgang an seiner Innenseite ringförmig abgetragen und gegen die Innenseite der Lagerfläche umgesetzt wird.

12. Vorrichtung nach den Ansprüchen 9 bis 11, dadurch gekennzeichnet, daß sämtliche Umsetz- (6), Belüftungs- (17) und Zerkleinerungselemente (7) in an sich bekannter Weise an oberhalb des Rotteguthaufens (1) bewegbaren Hebezeugen (5 bzw. 15 bzw. 21) o. dgl. gelagert sind, wobei das Hebezeug (5) zentrisch auf der Oberseite des zentralen Wärmetauschers (3) sitzt und sämtliche Elemente (6, 7, 17) an einer um das Wärmetauschzentrum (4) umlaufenden Kranbrücke (15) radial verstellbar angebracht sind.

13. Vorrichtung nach einem der vorhergehenden Ansprüche, dadurch gekennzeichnet, daß die Innenwand der ringförmigen Lagerfläche als etwa vertikale Wand eines zentralen Wärmespeichers (3) ausgebildet ist.

14. Vorrichtung nach einem der vorhergehenden Ansprüche, dadurch gekennzeichnet,

- 6 -

daß die Höhe der Innen- und/oder der Außenwand der ringförmigen Lagerfläche größer ist als die radial gemessene Breite der ringförmigen Lagerfläche.

15. Vorrichtung nach einem der vorhergehenden Ansprüche,

dadurch gekennzeichnet,

daß die Lagerfläche in einen Beschickungs- und Entnahmesektor, sowie mehrere Rottesektoren unterteilt ist.

16. Vorrichtung nach einem der vorhergehenden Ansprüche,

dadurch gekennzeichnet,

daß die ringförmige Lagerfläche mindestens im Bereich der Trocknungszone als Siebrost (12b), durch Warmluft oder Kaltluft von unten nach oben durchströmt, ausgebildet ist, die Lagerfläche sowohl als Rotteplatz, als auch wahlweise als Trocknungskasten für Grünfutter bzw. Heu usw. verwendet werden kann und eine als Siebrost ausgebildete Lagerfläche zur Trocknung von Halm- und Blattfrüchten die ringförmige Lager-

- 7 -

fläche zur Verrottung organischer Abfälle und zur Wärmegewinnung konzentrisch umschließt, und daß das Trocknungsgut als zusätzliche Wärmequelle und Wärmedämmschicht für das Rottematerial dient.

17. Vorrichtung nach einem der vorhergehenden Ansprüche,

dadurch gekennzeichnet,

daß die äußere Begrenzungswand der äußeren ringförmigen Lagerfläche abnehmbar oder verschiebbar ausgebildet ist, um das fertig getrocknete Halmgut in an sich bekannter Weise mittels eines Blockschneidegerätes entnehmen zu können.

18. Vorrichtung nach einem der vorhergehenden Ansprüche,

dadurch gekennzeichnet,

daß die ringförmigen Lagerflächen und der zentrale Wärmespeicher mit einer bewegbaren, etwa horizontal verlaufenden, vorzugsweise wärmedämmenden Decke versehen sind.

- 8 -

19. Vorrichtung nach einem der vorhergehenden Ansprüche,

dadurch gekennzeichnet,

daß die Decke wenigstens eine Öffnung aufweist, in der ein Förder- und/oder Zerkleinerungsgerät angeordnet ist, und mit dieser konzentrisch um den Lagerzapfen der Anlage auf einem Kreisbogen verschiebbar ist.

20. Vorrichtung nach einem der vorhergehenden Ansprüche, dadurch gekennzeichnet,

daß der obere Rand der äußeren Begrenzungswand der ringförmigen Lagerfläche als Laufbahn für die Räder der das Zerkleinerungs- und/oder Fördergerät tragenden, beweglichen Brücke ausgebildet ist, die um einen im Zentrum der Lagerfläche vorzugsweise auf dem Speicher angebrachten Zentrallagerzapfen schwenkbar ausgebildet ist.

21. Vorrichtung nach einem der vorhergehenden Ansprüche, dadurch gekennzeichnet,

daß das Fördergerät als in vertilaler und horizontaler Ebene beweglicher Greifer ausgebildet ist,

- 9 -

der mit einem mit der Brücke lösbar verbundenen
Zerkleinerungsgerät zusammenwirkt, das entweder
oberhalb der Oberkante einer seitlichen Begrenzungswand der Lagerfläche oder außerhalb
derselben angeordnet ist.

22. Vorrichtung nach einem der vorhergehenden
Ansprüche,

dadurch gekennzeichnet,

daß die Förder- und Zerkleinerungsvorrichtung
auf einem fahrbaren Wärmespeicher angeordnet
ist, der wahlweise an verschiedenen Orten im
Zentrum ringförmiger Lagerflächen aufstellbar
ist.

Fig. 1

Fig. 2

0060997

*Fig. 3*

*Fig. 4*

-3/4-

0060997

Fig. 5

Fig. 6

_Fig. 7_

21

17

16

20a

1

20

20

20

2

_Fig. 8_

20

21

20

20a

20

23

7

22

6

E

A

**0060997**

# EUROPÄISCHER RECHERCHENBERICHT

Europäisches
Patentamt

EP 82 10 1221

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | NL-A-7 902 752 (VAN BEERS)<br><br>*Seite 5, Anspruche 1,7,8; Seite 3, Zeilen 11-16; Seite 4, Zeilen 9-11*<br><br>--- | 1,5,6,<br>7,8 | C 05 F 9/04<br>C 05 F 3/06 |
| Y | DE-A-2 446 086 (WEISSENHORNER)<br><br>*Seite 3, Anspruche 1,2; Figuren 5,6*<br><br>--- | 1,12,<br>19,20,<br>22 | |
| Y | DE-A-2 711 803 (STAHL)<br>*Seite 1, Anspruch 1;Seite 3, Anspruch 12; Seite 4, Anspruch 17; Seite 9, Zeilen 14-20*<br><br>--- | 1,2,3 | |
| P,Y | DE-A-3 023 012 (PROPFE)<br>* Seite 1, Anspruche 1,4; Seite 2, Anspruch 9*<br><br>--- | 1 | RECHERCHIERTE SACHGEBIETE (Int. Cl. ³) |
| A | FR-A-2 074 604 (ANVAR)<br><br>--- | | C 05 F 3/06<br>C 05 F 9/04<br>C 05 F 13/00<br>C 05 F 9/02 |
| A | DE-B-2 845 387 (MOEBUS)<br><br>--- | | |
| A | DE-A-2 850 500 (WEICHEL)<br><br>----- | | |

Der vorliegende Recherchenbericht wurde für alle Patentansprüche erstellt.

| Recherchenort<br>DEN HAAG | Abschlußdatum der Recherche<br>25-06-1982 | Prüfer<br>STEELANDT B. |
|---|---|---|